# EUROPEAN PATENT APPLICATION

(11) **EP 1 486 477 A1**
(43) Date of publication of application: **15.12.2004**
(21) Application number: 04013485.0
(22) Date of filing: 08.06.2004
(51) Int. Cl.: C05D 9/02, C05G 3/00, C05F 11/10

(54) **Method for obtaining a fertilizing preparation supplying microelements and preparation thus obtainable**

(30) Priority: 13.06.2003 IT mo20030173
(71) Applicant: Ambri, Franco, 41049 Sassuolo (Modena) (IT)
(72) Inventor: Ambri, Franco, 41049 Sassuolo (Modena) (IT)
(74) Representative: Modiano, Guido, Dr.-Ing.

(57) **Abstract**

A method for obtaining a fertilizing preparation supplying microelements comprising dissolving, at least partially, at least one fertilizer of the type having a glassy matrix and comprising at least one microelement with an aqueous solution of citric acid (C₃H₄OH(COOH)₃) to obtain a fertilizing preparation supplying microelements in liquid state, the glassy matrix being at least partially soluble in the aqueous solution of citric acid.

## Description

The present invention relates to a method for obtaining a fertilizing preparation supplying microelements and to the preparation thus obtainable.

In the field of cultivations in general, it is known to classify fertilizing elements into three distinct categories according to the different quantities thereof absorbed by crops: primary (nitrogen, phosphorus and potassium), secondary (calcium, magnesium, sodium and sulfur), and microelements (boron, cobalt, copper, iron, manganese, molybdenum and zinc).

In the case of crops in soil, some microelements can be present naturally in the cultivation soils: often, however, due to excessively high pH values that are characteristic of said soils, these microelements are insoluble and, therefore, not available to the root system of the crops.

To facilitate their dissolution, it is known to add predefined quantities of acids, for example nitric acid, sulfuric acid, phosphoric acid and citric acid, to the solutions used for fertilizing irrigation of cultivation soils. The addition of these acids, besides having purely technical purposes, as they avoid clogging of the drip-feeding nozzles, reduces the hardness of the irrigation water, facilitates the activity of certain antiparasitic agents, and allows to reduce the pH of the cultivation soils to values that facilitate the dissolution of the microelements contained therein in forms that can be absorbed by the root system of the crops.

Often, however, it is necessary to modify the content of microelements present in the cultivation soil and/or add thereto the microelements that are missing; this need is particularly felt in the case of hydroponic cultivations or cultivations on artificial soils.

For example, it is known to use as microelement carriers their inorganic salts (sulfates, nitrates, or others) or oxides; however, at alkaline pH values (above 7), which are characteristics of most cultivation soils, they have the drawback of precipitating in the form of insoluble hydroxides that cannot be absorbed by crops.

To obviate this drawback, it is known to supply the microelements in the form of chelates, which are synthetic organometallic compounds in which a cation of a microelement is complexed by an organic compound such as, for example, ethylenediaminetetraacetic acid (EDTA).

Chelates are soluble in water, are stable, i.e., do not produce precipitates for pH values comprised between 5 and 9.5, and usually are added to fertilizers used in fertilizing irrigation.

The use of chelates as carriers of the microelements, however, is not free from drawbacks, including the fact that the process for synthesizing them is very complicated, long and expensive.

Another drawbacks is that each chelate, in addition to having a high cost, supplies a single microelement; if it is necessary to administer a plurality of microelements, it is necessary to use a plurality of corresponding chelates, with a consequent disadvantageous increase in costs sustained by users.

Another drawback is that chelates of boron are currently not available, and boron therefore cannot be administered except by using alternative methods.

The aim of the present invention is to eliminate the above-mentioned drawbacks, by providing a method for obtaining a fertilizing preparation supplying microelements, which is simple, easy and quick to perform, modest in cost, and allows to obtain a fertilizing preparation supplying one or more microelements, including boron, which is soluble, stable over a wide range of pH variability, and has a low cost.

Within this aim, an object of the present invention is to provide a fertilizing preparation supplying one or more microelements, including boron, that is soluble and stable over a wide range of pH variability, and has a low cost.

This aim and this and other objects that will become better apparent hereinafter are achieved by a method for obtaining a fertilizing preparation supplying microelements, characterized in that it comprises dissolving at least partially at least one fertilizer of the type with a glassy matrix and comprising at least one microelement with an aqueous solution of citric acid (C₃H₄OH(COOH)₃) for obtaining a fertilizing preparation supplying microelements in the liquid state, said glassy matrix being at least partially soluble in said aqueous solution of citric acid.

The term microelement or micronutrient designates a fertilizing element that is absorbed in low quantity by crops with respect to so-called primary fertilizing elements (nitrogen, phosphorus and potassium) and secondary ones (calcium, magnesium, sodium and sulfur).

The expression "fertilizers of the type having a glassy matrix and comprising at least one microelement" is meant to designate known fertilizers having a predominantly amorphous structure and constituted by a glassy matrix acting particularly as a carrier and in which one or more microelements are dispersed and bonded.

Such fertilizers having a glassy matrix are obtained with the known technology of glass preparation, which substantially provides for the mixing of the raw materials that supply the components of the glassy matrix (among which mention is made, using oxide nomenclature, of for example SiO₂, Al₂O₃, B₂O₃, P₂O₅, Na₂O, K₂O, Li₂O, CaO, BaO, MgO, ZrO₂, TiO₂) with the components that supply the microelements, melting the resulting mixture at high temperature, rapidly cooling the mixture thus melted in order to form the glassy matrix, granulating and possibly milling the fertilizer having a glassy matrix thus obtained in the form of granules or powder.

It should be noted that the composition of the fertilizers having a glassy matrix is not a subject of the present invention and does not limit its inventive concept; the fertilizers having a glassy matrix that can be used to carry out the present invention are all those fertilizers that contain at least one microelement and the glassy matrix of which is at least partially soluble in an aqueous solution of citric acid.

The microelements are chosen from the group that comprises: boron (B), cobalt (Co), copper (Cu), iron (Fe), manganese (Mn), molybdenum (Mo), zinc (Zn), selenium (Se) and vanadium (V).

The aqueous solution of citric acid used for the acid attack of the fertilizer or fertilizers having a glassy matrix comprises:

| | |
|---|---|
| - water | 40.0% - 95.0% |
| - citric acid | 5.0% - 60.0%. |

Moreover, it can comprise at least one auxiliary acid chosen from the group that comprises: sulfuric acid (H₂SO₄), phosphoric acid (H₃PO₄), nitric acid (HNO₃), oxalic acid ((COOH)₂) and acetic acid (CH₃COOH), in quantities that can vary between 0.0% and 5.0%, taken individually or mixed together.

Said auxiliary acids are substantially meant to facilitate the dissolution of the glassy matrix of the fertilizer or fertilizers subjected to the acid attack.

Dissolution consists in mixing a quantity by weight that can vary between 5% and 35% of one or more fertilizers of the type having a glassy matrix with a quantity by weight that can vary respectively between 95% and 65% of the aqueous solution of citric acid with or without mechanical agitation.

The following table summarizes the practical limits of execution (% by weight) :

| | | |
|---|---|---|
| - fertilizer(s) having a glassy matrix | 5.0% | 35.0% |
| - citric acid | 4.0% | 40.0% |
| - water | 25.0% | 91.0% |

This mixture is left to rest for a time sufficient to achieve partial or total dissolution of the fertilizer or fertilizers having a glassy matrix in the aqueous solution of citric acid.

The dissolution can be performed at ambient temperature, at about 20°C, or even with heating, at temperatures of about the boiling temperature of said solution.

Conveniently, before mixing the aqueous solution of citric acid with the fertilizer or fertilizers having a glassy matrix, the latter, if they are not already in the form of sufficiently fine powders, can be subjected to milling until they are reduced to a fine powder with an average diameter of about a few tenths of a mm, preferably less than 0.5 mm, so as to facilitate the subsequent acid attack.

At the end of the dissolution (acid attack), a fertilizing preparation supplying microelements is obtained, which is in the liquid state and comprises at least one compund, organometallic complex of coordination of citric acid and of one or more microelements derived from the dissolved fertilizer or fertilizers having a glassy matrix.

The citric acid acts as a "complexing agent" or as a "binding agent" for the microelement or microelements supplied by the fertilizer or fertilizers having a glassy matrix.

The composition and structure of the resulting fertilizing preparation vary depending on the components of the glassy matrix of the dissolved fertilizers.

If the glassy matrix of the fertilizers subjected to acid attack is not completely soluble in the aqueous solution of citric acid, the method according to the invention comprises the clarification of the fertilizing preparation obtained in the liquid state in order to separate from it the undissolved residues of the fertilizer or fertilizers having a glassy matrix.

The method according to the invention may further comprise the partial concentration or total drying of the fertilizing preparation in liquid state to obtain the fertilizing preparation in pasty state and in dry powder state, respectively.

Concentration and drying consist in partially or totally evaporating, by means of known technologies (chamber dryers, continuous belt driers, spray dryers, vacuum dryers, gate dryers or others), the aqueous fraction of the fertilizing preparation in liquid state or in pasty state.

The fertilizing preparation, in liquid solution state and in pasty state or as a dry powder, can be used as a mixture with other known fertilizers or redissolved in water to be used for example in fertilizing irrigation, in hydroponics, for fertilizing ornamental cultivations or greenhouse cultivations.

The fertilizing preparation supplying microelements according to the present invention comprises at least one compound, organometallic complex of coordination of citric acid and of at least one microelement supplied by at least one fertilizer of the type having a glassy matrix.

The microelements are chosen from the group that comprises: boron (B), cobalt (Co), copper (Cu), iron (Fe), manganese (Mn), molybdenum (Mo), zinc (Zn), selenium (Se) and vanadium (V).

The fertilizing preparations according to the present invention are stable at pH values between 5.0 and 9.5; i.e., at such pH values, they do not cause separation or precipitation of insoluble compounds such as hydroxides of the microelements contained therein.

The examples that follow are provided only as an illustration of the present invention and must not be understood to limit the scope of the present invention, as defined by the accompanying claims.

### Example 1

A fertilizer having a glassy matrix with the following composition was taken:

| | |
|---|---|
| SiO₂ | 6.5 |
| ZrO₂ | 0.5 |
| TiO₂ | 1.0 |
| Al₂O₃ | 2.0 |
| CaO | 10.5 |
| MgO | 2.0 |
| Na₂O | 7.0 |
| K₂O | 11.0 |
| P₂O₅ | 18.5 |
| B₂O₃ | 15.0 |
| Fe₂O₃ | 9.0 |
| ZnO | 8.0 |
| MnO | 6.0 |
| CuO | 3.0 |

(the composition is expressed, according to the method used in the glass field, as a % by weight of the oxides).

Said fertilizer having a glassy matrix contains the following percentages by weight of microelements:

| | |
|---|---|
| B | 4.65 |
| Fe | 6.33 |
| Mn | 4.65 |
| Cu | 2.38 |
| Zn | 6.45 |

Said fertilizer having a glassy matrix was milled until a powder with an average diameter of about 60 µm was obtained.

An aqueous solution of citric acid was prepared by mixing 80 % water and 20 % citric acid.

A quantity equal to 15 g of the powder of said fertilizer having a glassy matrix was mixed with a quantity equal to 85 g of the prepared aqueous solution.

The resulting mixture was left to rest for 40 min at a temperature of 25 °C until the fertilizer having a glassy matrix was completely dissolved in the aqueous solution of citric acid, in order to obtain a fertilizing preparation supplying microelements in the liquid state that contains compounds, organometallic complexes of coordination of citric acid and of the microelements supplied by the fertilizer having a glassy matrix that is used, including boron (B).

It is noted that the resulting fertilizing preparation contains various microelements (B, Fe, Mn, Cu and Zn).

### Example 2

A fertilizer having a glassy matrix with the following composition was taken:

| | |
|---|---|
| SiO₂ | 4.0 |
| TiO₂ | 0.8 |
| Al₂O₃ | 2.0 |
| CaO | 10.0 |
| MgO | 1.0 |
| Na₂O | 9.0 |
| K₂O | 17.0 |
| P₂O₅ | 25.2 |
| B₂O₃ | 9.0 |
| Fe₂O₃ | 13.0 |
| ZnO | 3.5 |
| MnO | 2.0 |
| CuO | 3.5 |

(the composition is expressed, according to the method used in the glass field, in % by weight of the oxides).

Said fertilizer having a glassy matrix contains the following % by weight of microelements:

| | |
|---|---|
| B | 2.8 |
| Fe | 9.15 |
| Mn | 1.55 |
| Cu | 2.77 |
| Zn | 2.82 |

Said fertilizer having a glassy matrix was milled until a powder with an average diameter of about 0.4 mm was obtained.

An aqueous solution of citric acid was prepared by mixing 90% of water and 10% of citric acid.

A quantity equal to 5 g of the powder of said fertilizer having a glassy matrix was mixed with a quantity equal to 500 g of the prepared aqueous solution.

The resulting suspension was left to react under mechanical agitation with a paddle agitator at 250 rpm for 3 h at a temperature of 70 °C, achieving almost total dissolution of the fertilizer having a glassy matrix in the aqueous solution of citric acid to obtain a fertilizing preparation supplying microelements in liquid state that contains compounds, organometallic complexes of coordination of citric acid and of the microelements supplied by the fertilizer having a glassy matrix that is used, including boron (B).

It is noted that the resulting fertilizing preparation contains various microelements (B, Fe, Mn, Cu and Zn).

The resulting liquid fertilizing preparation was subjected to clarification by natural settling.

### Example 3

A fertilizer having a glassy matrix with the following composition was taken:

| | |
|---|---|
| SiO₂ | 6.0 |
| ZrO₂ | 0.5 |
| TiO₂ | 1.5 |
| Al₂O₃ | 2.0 |
| CaO | 10.5 |
| Na₂O | 9.5 |
| K₂O | 17.5 |
| P₂O₅ | 26.0 |
| B₂O₃ | 10.0 |
| Fe₂O₃ | 16.5 |

(the composition is expressed, according to the method used in the glass field, in % by weight of the oxides).

Said fertilizer having a glassy matrix contains the following % by weight of microelements:

| | |
|---|---|
| B | 3.1 |
| Fe | 11.6 |

Said fertilizer having a glassy matrix was milled until a powder with an average diameter of 40 µm was obtained.

An aqueous solution of citric acid was prepared by mixing 75% of water and 25% of citric acid.

A quantity equal to 16 g of the powder of said fertilizer having a glassy matrix was mixed with a quantity equal to 84 g of the prepared aqueous solution.

The resulting mixture was left to rest for 40 min at a temperature of 25 °C, until the fertilizer having a glassy matrix was totally dissolved in the aqueous solution of citric acid to obtain a fertilizing preparation supplying microelements in the liquid state which contains compounds, organometallic complexes of coordination of citric acid and of the microelements supplied by the fertilizer having a glassy matrix that is used, including boron (B).

It is noted that the resulting fertilizing preparation contains a plurality of microelements (B, Fe).

In practice it has been found that the described invention achieves the proposed aim and object.

The method according to the invention is in fact simple and quick to provide in practice, can be performed by means of known kinds of equipment and with low costs.

The method according to the invention uses commercially available raw materials that are safe in use: it is noted in fact that citric acid is not toxic and, since it can derive from processes for extraction from vegetable raw materials, it is available in a form that is certified as genetically unmodified material and as such can therefore be used in organic farming.

The method according to the invention allows to obtain simply and rapidly fertilizing preparations supplying microelements that contain one or more microelements, including boron, which are soluble and stable over wide pH variability ranges and are used widely in particular in fertilizing irrigation, in hydroponics, for the fertilization of ornamental cultivations, and in greenhouses.

It is noted that the fertilizing preparations according to the present invention have a low cost and each one can supply a plurality of microelements simultaneously.

The invention thus conceived is susceptible of numerous modifications and variations, all of which are within the scope of the appended claims.

The disclosures in Italian Patent Application No. MO2003A000173 from which this application claims priority are incorporated herein by reference.

## Claims

1. A method for obtaining a fertilizing preparation supplying microelements, **characterized in that** it comprises dissolving, at least partially, at least one fertilizer of the type having a glassy matrix and comprising at least one microelement with an aqueous solution of citric acid (C₃H₄OH(COOH)₃) to obtain a fertilizing preparation supplying microelements in liquid state, said glassy matrix being at least partially soluble in said aqueous solution of citric acid.

2. The method according to claim 2, **characterized in that** said aqueous solution of citric acid comprises:
| | |
|---|---|
| - water | 40.0% - 95.0% |
| - citric acid | 5.0% - 60.0%. |

3. The method according to one or more of the preceding claims, **characterized in that** said aqueous solution of citric acid comprises at least one auxiliary acid chosen from the group that comprises: sulfuric acid (H₂SO₄), phosphoric acid (H₃PO₄), nitric acid (HNO₃), oxalic acid ((COOH) ₂) and acetic acid (CH₃COOH).

4. The method according to claim 3, **characterized in that** said aqueous solution of citric acid comprises said auxiliary acids in quantities between 0.0% and 5.0%.

5. The method according to one or more of the preceding claims, **characterized in that** said dissolution comprises mixing a quantity between 5% and 35% by weight of said fertilizers of the type having a glassy matrix with a quantity of 95% and 65% by weight of said aqueous solution of citric acid.

6. The method according to one or more of the preceding claims, **characterized in that** said microelements are chosen from the group that comprises: boron (B), cobalt (Co), copper (Cu), iron (Fe), manganese (Mn), molybdenum (Mo), zinc (Zn), selenium (Se) and vanadium (V).

7. The method according to one or more of the preceding claims,
**characterized in that** said glassy matrix is totally soluble in said aqueous solution of citric acid.

8. The method according to one or more of the preceding claims, **characterized in that** said dissolution occurs at a temperature between 20 °C and the boiling temperature of said aqueous solution of citric acid.

9. The method according to one or more of the preceding claims, **characterized in that** it comprises milling said fertilizers of the type having a glassy matrix into a fine powder with an average diameter of about a few tenths of a mm.

10. The method according to claim 9, **characterized in that** said fine powder has an average diameter of less than 0.5 mm.

11. The method according to one of claims 9 and 10, **characterized in that** said milling precedes said mixing.

12. The method according to one or more of the preceding claims, **characterized in that** it comprises clarification of said fertilizing preparation supplying microelements in liquid state in order to separate from it the residues of said fertilizers of the type having a glassy matrix that have not been dissolved by said aqueous solution of citric acid.

13. The method according to one or more of the preceding claims, **characterized in that** it comprises at least partially concentrating said fertilizing preparation supplying microelements in liquid state to obtain the fertilizing preparation supplying microelements in pasty state.

14. The method according to claim 13, **characterized in that** said concentration consists in partially evaporating the aqueous fraction of said fertilizing preparation supplying microelements in liquid state.

15. The method according to one or more of the preceding claims, **characterized in that** it comprises drying said fertilizing preparation supplying microelements in liquid state or in pasty state in order to obtain the fertilizing preparation supplying microelements in dry powder state.

16. A fertilizing preparation supplying microelements, **characterized in that** it comprises at least one compound, organometallic complex of coordination of citric acid (C₃H₄OH(COOH)₃) and of at least one microelement.

17. The preparation according to claim 16, **characterized in that** said microelements are supplied by at least one fertilizer of the type having a glassy matrix.

18. The preparation according to one of claims 16 and 17, **characterized in that** said microelements are chosen from the group comprising: boron (B), cobalt (Co), copper (Cu), iron (Fe), manganese (Mn), molybdenum (Mo), zinc (Zn), selenium (Se) and vanadium (V).

19. The preparation according to anyone of claims from 16 to 18, **characterized in that** it is stable at pH values variable between 5.0 and 9.5.

20. The preparation according to anyone of claims from 16 to 19, **characterized in that** it is in liquid state.

21. The preparation according to anyone of claims from 16 to 20, **characterized in that** it is in pasty state.

22. The preparation according to anyone of claims from 16 to 21, **characterized in that** it is in dry powder state.

23. The preparation according to anyone of claims from 16 to 22, **characterized in that** it can be obtained with the method according to anyone of claims 1 to 15.

24. Use of a fertilizing preparation supplying microelements according to anyone of claims from 16 to 23 mixed with other fertilizers or in an aqueous solution.

25. Use of a fertilizing preparation supplying microelements according to anyone of claims from 16 to 23 in fertilizing irrigation or in hydroponics.

26. Use of a fertilizing preparation supplying microelements according to anyone of claims from 16 to 23 for fertilization of cultivation soils, of ornamental cultivations, and of greenhouse cultivations.
